# EUROPÄISCHE PATENTSCHRIFT

(11) **EP 0 634 952 B1**
(45) Veröffentlichungstag und Bekanntmachung des Hinweises auf die Patenterteilung: **06.09.1995**
(21) Anmeldenummer: 93908879.5
(22) Anmeldetag: 01.04.1993
(51) Int. Cl.: B01D 39/16, B01D 46/24

(54) **FILTERELEMENT MIT EINEM FORMSTABILEN, DURCHLÄSSIG-PORÖSEN KUNSTSTOFF-FORMKÖRPER**
FILTER ELEMENT WITH A DIMENSIONALLY STABLE, PERMEABLE AND POROUS PLASTIC MOULDED BODY
ELEMENT DE FILTRAGE AVEC UN CORPS INDEFORMABLE, PERMEABLE ET POREUX EN MATIERE PLASTIQUE

(30) Priorität: 06.04.1992 DE 4211529
(43) Veröffentlichungstag der Anmeldung: 25.01.1995
(73) Patentinhaber: FIRMA HERDING GMBH Entstaubungsanlagen, D-92224 Amberg (DE)
(72) Erfinder: HERDING, Walter, D-8451 Hanbach (DE); BETHKE, Jürgen, D-8458 Sulzbach-Rosenberg (DE); RABENSTEIN, Klaus, D-8451 Hahnbach-Süss (DE)
(74) Vertreter: Klunker . Schmitt-Nilson . Hirsch
(86) Internationale Anmeldenummer: EP9300803
(87) Internationale Veröffentlichungsnummer: WO9319832

(56) Entgegenhaltungen:
- WO-A-85/04365
- WO-A-85/04595
- DE-A- 3 024 324
- DE-B- 1 176 850
- DE-U- 9 012 319
- DATABASE WPI Section Ch, Week 7606, Derwent Publications Ltd., London, GB; Class A04, AN 76-10725X
- TECHNISCHE MITTEILUNGEN Bd. 85, Nr. 2, Juli 1992, DE, Seiten 100-104, S. STRAUSS 'Gesinterte Kunststoff-Formteile für die Fest-/Flüssig-Filtration'

## Beschreibung

Die Erfindung bezieht sich, nach einem ersten Aspekt, auf ein Filterelement, insbesondere zum Abscheiden von Feststoffpartikeln aus Luft, mit folgenden Merkmalen:
(a) das Filterelement weist einen durchlässigporösen, im wesentlichen formstabilen Formkörper auf;
(b) der Formkörper besteht im wesentlichen aus Polyethylen;
(c) für den Aufbau des Formkörpers sind ultrahochmolekulares, feinkörniges Polyethylen mit einer mittleren Molmasse von mehr als 10⁶ und ein im Ausgangszustand feinkörniger, weiterer Polyethylenbestandteil mit einer mittleren Molmasse von weniger als 10⁶ vorgesehen;
(d) die Körner aus ultrahochmolekularem Polyethylen und der weitere Polyethylenbestandteil sind durch Wärmeeinwirkung zu dem Formkörper vereinigt; und
(e) der Formkörper ist an seiner Zuströmoberfläche für das zu filternde Medium mit einer feinporösen Beschichtung aus einem feinkörnigen Material versehen, das eine kleinere mittlere Korngröße als der Formkörper aufweist und dessen Oberflächenporen an der Zuströmoberfläche mindestens zu einem erheblichen Teil ihrer Tiefe ausfüllt,
**dadurch gekennzeichnet,**
(f) daß das ultrahochmolekulare Polyethylen im Ausgangszustand eine Korngrößenverteilung mit mindestens 95 Gew.-% der Körner im Bereich von > 63 bis ≦ 250 µm hat.

Aus dem Dokument EP-B-0 177 521 ist ein Filterelement bekannt, dessen im wesentlichen formstabiler, durchlässig-poröser Formkörper aus feinkörnigem Polyethylen mit höherer Molmasse und im Ausgangszustand feinkörnigem Polyethylen mit niedrigerer Molmasse besteht, wobei diese Polyethylenbestandteile durch Wärmeeinwirkung zu dem Formkörper vereinigt sind und wobei eine Oberflächenporen-Beschichtung aus feinkörnigem Polytetrafluorethylen vorgesehen ist. Bei praktisch ausgeführten, derartigen Filterelementen hat das höhermolekulare Polyethylen eine Molmasse von mehr als 10⁶. Aufgrund der Oberflächenporen-Beschichtung kann das Filterelement nach dem Prinzip der Oberflächenfiltration filtern. Auch feine und feinste Partikel aus dem zu filternden Medium werden bereits an der Zuströmoberfläche des Filterelements festgehalten und können von dieser besonders leicht beispielsweise nach dem Rückstromprinzip abgereinigt werden.

Bisher wurde bei der Herstellung dieser Filterelemente mit einem ultrahochmolekularen Polyethylen-Ausgangsmaterial gearbeitet, bei dem knapp 10 % der Körner größer als 250 µm und kleiner oder gleich 63 µm sind. Diese Filterelemente werden in der Praxis mit gutem Erfolg eingesetzt. Mit der Erfindung wird jedoch eine weitere Verbesserung der bekannten Filterelemente erreicht.

Der Erfindung liegt das technische Problem zugrunde, ein durchlässig-poröses Filterelement mit einem im wesentlichen formstabilen, im wesentlichen aus Polyethylen bestehenden und an seiner Zuströmoberfläche feinporös beschichteten Formkörper in Richtung verringerten Durchströmungswiderstands und perfekterer Ausbildung der Beschichtung weiterzuentwickeln.

Eine erste Lösung dieses Problems, die bereits am Ende des einleitenden Absatzes angegeben worden ist, besteht erfindungsgemäß darin, daß das ultrahochmolekulare Polyethylen im Ausgangszustand eine Korngrößenverteilung mit mindestens 95 Gew.-% der Körner im Bereich von > 63 bis ≦ 250 µm hat.

Durch diese erfindungsgemäße, neuartige, scharfe Festlegung des Korngrößenbereichs des ultrahochmolekularen Polyethylens für den zu beschichtenden Formkörper wird erreicht, daß der unbeschichtete Formkörper eine sehr gleichmäßige Porenverteilung hat, bei dem insbesondere sehr kleine Poren, die den Durchströmungswiderstand erhöhen, praktisch vollständig fehlen. Auch die Oberflächenporen des unbeschichteten Formkörpers weisen eine sehr gleichmäßige Porengrößenverteilung auf. Dadurch ergibt sich auch in der Beschichtung eine sehr gleichmäßige Porengrößenverteilung mit - bezogen auf das gleiche Beschichtungsmaterial - geringerer mittlerer Porengröße. Hieraus resultiert eine weitestgehend gleichmäßige Filterbeladung und eine weitestgehend perfekte Oberflächenfiltration an der gesamten Zuströmoberfläche des Filterelements.

Die Erfindung bezieht sich, nach einem zweiten Aspekt, auf ein Filterelement, insbesondere zum Abscheiden von Feststoffpartikeln aus Luft, mit den eingangs angegebenen Merkmalen (a) bis (e), dadurch gekennzeichnet, daß das ultrahochmolekulare Polyethylen im Ausgangszustand eine Korngrößenverteilung mit mindestens 60 Gew.-% der Körner im Bereich von > 125 bis ≦ 250 µm hat.

Durch diese zweite erfindungsgemäße Lösung des angegebenen technischen Problems werden Effekte auf der Linie der vorstehend im Zusammenhang mit der ersten Lösung geschilderten Effekte erreicht. Während bisher von den Körnern aus ultrahochmolekularem Polyethylen des Korngrößenbereichs 63 bis 250 µm deutlich mehr als die Hälfte im Korngrößenbereich von 63 bis 125 µm lag und der Gewichtsanteil der Körner im Korngrößenbereich von 125 bis 250 µm deutlich unter 50 % lag, wurde mit der zweiten erfindungsgemäßen Lösung überraschend festgestellt, daß sich eine Reduzierung des Durchströmungwiderstands des Formkörpers und Vergleichmäßigungseffekte entsprechend den weiter vorn geschilderten ergeben.

Die Erfindung bezieht sich, nach einem dritten Aspekt, auf eine Filterelement, insbesondere zum Abscheiden von Feststoffpartikeln aus Luft, mit folgenden Merkmalen:
(a) das Filterelement weist einen durchlässigporösen, im wesentlichen formstabilen Formkörper auf;
(b) der Formkörper besteht im wesentlichen aus Polyethylen;
(c) für den Aufbau des Formkörpers ist ultrahochmolekulares, feinkörniges Polyethylen mit einer mittleren Molmasse von mehr als 10⁶ vorgesehen; und
(d) der Formkörper ist an seiner Zuströmoberfläche für das zu filternde Medium mit einer feinporösen Beschichtung aus einem feinkörnigen Material versehen, das eine kleinere mittlere Korngröße als der Formkörper aufweist und dessen Oberflächenporen an der Zuströmoberfläche mindestens zu einem erheblichen Teil ihrer Tiefe ausfüllt,
**dadurch gekennzeichnet,**
(e) daß das ultrahochmolekulare Polyethylen im Ausgangszustand eine Korngrößenverteilung mit mindestens 70 Gew.-% der Körner im Bereich von > 63 bis ≦ 315 µm hat; und
(f) daß die Körner aus ultrahochmolekularem Polyethylen durch Wärmeeinwirkung unmittelbar miteinander zu dem Formkörper vereinigt sind.

Bei dem Filterelement gemäß dem dritten Aspekt der Erfindung ist kein weiterer Polyethylenbestandteil mit einer mittleren Molmasse von weniger als 10⁶ vorgesehen; die Körner aus ultrahochmolekularem Polyethylen sind durch Wärmeeinwirkung unmittelbar miteinander zu dem Formkörper vereinigt. Mit der dritten erfindungsgemäßen Lösung werden Effekte auf der Linie der im Zusammenhang mit der ersten erfindungsgemäßen Lösung geschilderten Effekte erreicht, ohne daß es so entscheidend auf die sehr weitgehende Eleminierung der Körner mit einer Größe unter 63 µm und der Körner mit einer Größe von mehr als 250 µm (vgl. erste erfindungsgemäße Lösung) oder auf die relativ starke Konzentration auf den Korngrößenbereich von 125 bis 250 µm (vgl. zweite erfindungsgemäße Lösung) ankäme, wiewohl diese Maßnahmen jeweils für sich oder gemeinsam auch bei der dritten erfindungsgemäßen Lösung als Weiterbildung bevorzugt sind.

Alternativ ist es möglich, bei der dritten erfindungsgemäßen Lösung mit einem weiteren Polyethylenbestandteil mit einer mittleren Molmasse von weniger als 10⁶ zu arbeiten, allerdings in einem deutlich geringeren Anteil als es bisher vorgesehen war. Es kommt ein Gewichtsanteil des weiteren Polyethylenbestandteils, bezogen auf die Summe von ultrahochmolekularem Polyethylen und weiterem Polyethylenbestandteil, von unter 15 %, vorzugsweise unter 10 %, in Betracht.

Ein verringerter Strömungswiderstand beim Hindurchströmen des zu filternden Mediums durch die Filterelementwand führt dazu, daß man mit kleinerer Förderleistung, beispielsweise des Gebläses oder der Pumpe zum Hindurchfördern des zu filternden Mediums durch das Filterelement, auskommt. Oder mit anderen Worten: Bei gegebener Filtervorrichtung mit gegebener Filterfläche und gegebener Förderleistung erreicht man einen höheren Durchsatz des zu filternden Mediums durch die Filtervorrichtung.

Der Formkörper kann ausschließlich aus den vorstehend beschriebenen Polyethylenbestandteilen bestehen. Es ist aber auch möglich, daß der Formkörper noch weitere Bestandteile aufweist, welche die bleibende Vereinigung des Bestandteile durch Wärmeeinwirkung nicht signifikant beeinträchtigen. Dabei handelt es sich, sofern überhaupt vorhanden, in aller Regel um Zusätze in relativ kleiner, prozentualer Menge. Als Beispiel sei Ruß als Antistatikzusatz genannt.

Das erfindungsgemäße Filterelement eignet sich generell zum Abscheiden von Partikeln aus zu filternden, flüssigen oder gasförmigen Medien. Als besonders bevorzugte Einsatzgebiete seien das Abscheiden von Feststoffpartikeln aus Luft und das Abscheiden von Feststoffpartikeln aus Flüssigkeiten, wie Wasser oder Öl, genannt.

Es wird darauf hingewiesen, daß die genannte Beschichtung auch die gesamte Zuströmoberfläche des Formkörpers bedecken kann, also sich nicht auf die teilweise oder vollständige Ausfüllung der an der Zuströmoberfläche des Formkörpers vorhandenen Oberflächenporen beschränken muß. Funktionell in erster Linie wesentlich ist jedoch ein Ausfüllen der Oberflächenporen mindestens zu einem erheblichen Teil ihrer Tiefe, wobei es sich vorzugsweise um einen an der Oberfläche beginnenden Teil der Tiefe handelt, es sich aber auch um einen von der Oberfläche zurückgesetzten Teil der Tiefe handeln kann.

Bei der dritten erfindungsgemäßen Lösung beträgt der Anteil der Körner im Bereich von 63 bis 315 µm vorzugsweise mindestens 80 Gew.-%, stärker bevorzugt mindestens 90 Gew.-%, noch stärker bevorzugt mindestens 95 Gew.-%.

In bevorzugter Weiterbildung der ersten und der dritten Lösung sind - wie bei der zweiten Lösung-mindestens 60 Gew.-% der Körner im Bereich von > 125 bis ≦ 250 µm.

Bei allen drei Lösungen ist bevorzugt, daß mindestens 70 Gew.-% der Körner im Bereich von > 125 bis ≦ 250 µm sind.

Bei der zweiten und der dritten Lösung ist bevorzugt, daß mindestens 80 Gew.-%, stärker bevorzugt mindestens 90 Gew.-%, noch stärker bevorzugt mindestens 95 Gew.-% der Körner im Bereich von > 63 bis ≦ 250 µm sind.

Bei allen drei Lösungen ist bevorzugt, daß mindestens 97 Gew.-% der Körner im Bereich von > 63 bis ≦ 250 µm sind.

Bei der ersten und der zweiten Lösung beträgt der Gewichtsanteil des weiteren Polyethylenbestandteils, bezogen auf die Summe von ultrahochmolekularem Polyethylen und weiterem Polyethylenbestandteil, vorzugsweise 3 bis 70 %, stärker bevorzugt 5 bis 60 %, noch stärker bevorzugt 20 bis 60 %.

Wenn der weitere Polyethylenbestandteil vorhanden ist, hat er vorzugsweise eine mittlere Molmasse im Bereich von 10³ bis 10⁶. Nach einer ersten Alternative liegt die mittlere Molmasse des weiteren Polyethylenbestandteils vorzugsweise im Bereich von 10⁴ bis 10⁶, stärker bevorzugt im Bereich von 10⁵ bis 10⁶, nochmals stärker bevorzugt im Bereich von 2 x 10⁵ bis 10⁶, wobei letzteres normalerweise als hochmolekulares Polyethylen bezeichnet wird, nachfolgend zur Vereinfachung jedoch jeder Polyethylenbestandteil mit einer mittleren Molmasse über 5 x 10⁴ als hochmolekular bezeichnet wird. Nach einer zweiten Alternative liegt die mittlere Molmasse des weiteren Polyethylenbestandteils im Bereich von weniger als 5 x 10⁴, stärker bevorzugt im Bereich von 10³ bis 5 x 10⁴, noch stärker bevorzugt im Bereich von 5 x 10³ bis 5 x 10⁴. Diese Bereiche liegen alle im Gebiet des niedermolekularen Polyethylens. Niedermolekulares Polyethylen in den genannten Molmassenbereichen wird häufig auch als Polyethylenwachs bezeichnet. Es ist möglich, mit einem Gemisch aus den beiden Materialien, die im vorstehenden Absatz als erste Alternative und als zweite Alternative geschildert worden sind, zu arbeiten, so daß sich der weitere Polyethylenbestandteil aus einem ersten Unterbestandteil mit einer höheren mittleren Molmasse und einem zweiten Unterbestandteil mit einer niedrigeren mittleren Molmasse zusammensetzt. Dabei beträgt der Gewichtsanteil des zweiten Unterbestandteils, bezogen auf den gesamten weiteren Polyethylenbestandteil, vorzugsweise 2 bis 50 %, stärker bevorzugt 5 bis 20 %.

Was die Korngrößenverteilung eines etwaigen hochmolekularen Polyethylenbestandteils anlangt, ist im Ausgangszustand die Korngrößenverteilung vorzugsweise so, daß mindestens 95 Gew.-% der Körner unter einer Korngröße von 1000 µm und höchstens 15 Gew.-% der Körner unter einer Korngröße von 63 µm sind, vorzugsweise mindestens 99 Gew.-% der Körner unter einer Korngröße von 1000 µm und höchstens 5 Gew.-% der Körner unter einer Korngröße von 63 µm.

Was die Korngrößenverteilung des etwaigen niedermolekularen Polyethylenbestandteils anlangt, ist die Korngrößenverteilung im Ausgangszustand vorzugsweise so, daß mindestens 95 Gew.-% der Körner unter einer Korngröße von 500 µm und höchstens 15 Gew.-% der Körner unter einer Korngröße von 63 µm sind. Alternativ ist ein sogenanntes Mikrowachs bevorzugt, bei dem im Ausgangszustand mindestens 95 Gew.-% der Körner unter einer Korngröße von 63 µm sind.

Wenn in der vorliegenden Anmeldung von "im Ausgangszustand" gesprochen worden ist, ist damit der Zustand der Polyethylenbestandteile vor der Wärmeeinwirkung zum Vereinigen zu dem durchlässig-porösen Formkörper gemeint.

Wenn der weitere Polyethylenbestandteil eine mittlere Molmasse von weniger als 5 x 10⁴ hat oder einen Unterbestandteil mit dieser Molmasse enthält, stellt man eine besonders große Haftfestigkeit der Körner des Beschichtungsmaterials in den Oberflächenporen des Formkörpers fest. Rasterelektronenmikroskopische Aufnahmen der Zuströmoberfläche des Filterelements vor Aufbringen der Beschichtung zeigen, daß es für diesen Effekt wohl ursächlich ist, daß der niedermolekulare Polyethylenbestandteil an den Wänden der Oberflächenporen gekrümmtstielartige Vorsprünge bildet, die offenbar einer besonders festen Verankerung der Körner des Beschichtungsmaterials förderlich sind.

Vorzugsweise hat das ultrahochmolekulare Polyethylen im Ausgangszustand eine derartige Korngrößenverteilung, daß sich für den unbeschichteten Formkörper ein Graph "kumulierter Porenanteil in Prozent über Porendurchmesser" mit einem im wesentlichen linearen Verlauf mindestens im Bereich von 20 bis 75 % ergibt. Genaueres hierzu wird weiter unten im Beispielsteil der Beschreibung ausgeführt.

Nach einer bevorzugten Weiterbildung der Erfindung werden Körner aus ultrahochmolekularem Polyethylen eingesetzt, die eine Gestalt mit beulenartigen Erhebungen über die ansonsten etwa kugelige Korngestalt haben. Es wurde festgestellt, daß dies zu einer besonders guten Haftung der Körner des Beschichtungsmaterials an dem Formkörper bzw. in dessen Oberflächenporen führt. Außerdem beobachtet man einen tendenziell verringerten Durchströmungswiderstand des Formkörpers.

Hinsichtlich der mittleren Molmasse des ultrahochmolekularen Polyethylens ist eine Obergrenze von 6 x 10⁶ bevorzugt, besonders bevorzugt ein Bereich von 2 x 10⁶ bis 6 x 10⁶.

Vorzugsweise haben die Körner aus ultrahochmolekularem Polyethylen ein Schüttgewicht von 300 bis 550 g/l, wobei 350 bis 500 g/l besonders bevorzugt ist. Das Schüttgewicht des hochmolekularen Polyethylenbestandteils im Ausgangszustand beträgt vorzugsweise 200 bis 350 g/l. Die Schmelztemperatur des niedermolekularen Polyethylenbestandteils beträgt vorzugsweise 100°C bis 150°C.

Als feinkörniges Material zur Oberflächenporen-Beschichtung ist Polytetrafluorethylen bevorzugt. Das feinkörnige Beschichtungsmaterial hat vorzugsweise eine mittlere Korngröße von unter 100 µm, höchst vorzugsweise unter 50 µm.

Gegenstand der Erfindung ist ferner ein Verfahren zur Herstellung der vorstehend beschriebenen Filterelemente bzw. Formkörper, dadurch gekennzeichnet,
- daß die Körner aus ultrahochmolekularem Polyethylen, gegebenenfalls gemischt mit dem weiteren Polyethylenbestandteil, in eine Form gefüllt werden;
- daß der Forminhalt auf eine Temperatur von 170°C bis 250°C erhitzt wird für eine für das Vereinigen zu dem Formkörper ausreichende Zeit (wofür in der Regel 10 bis 180 min ausreichen);
- daß der Formkörper in der Form abgekühlt wird (nicht notwendigerweise bis auf Raumtemperatur);
- daß der Formkörper aus der Form entnommen wird; und
- daß auf die Zuströmoberfläche des aus der Form entnommenen Formkörpers die Beschichtung aufgebracht wird.

Die Beschichtung läßt sich besonders günstig in Form einer Suspension aufbringen, die anschließend getrocknet wird, vorzugsweise durch Anblasen mit warmer Luft. Besonders gut läßt sich die Suspension mittels des Sprüh- und Bürst-Verfahrens aufbringen.

Vorzugsweise wird der Forminhalt durch Vibrieren in die Form eingerüttelt. Beim Erhitzen des Forminhalts schmilzt - sofern vorhanden - zuerst der niedermolekulare Polyethylenbestandteil. Mit weiter zunehmender Temperatur des Forminhalts schmilzt auch der hochmolekulare Polyethylenbestandteil an, und es kann zu einer gewissen formstabilen Erweichung der ultrahochmolekularen Polyethylenkörner an ihrer Oberfläche kommen. Der hochmolekulare Polyethylenbestandteil bildet ein Bindegerüst zwischen den ultrahochmolekularen Polyethylenkörnern, während sich der niedermolekulare Polyethylenbestandteil - sofern vorhanden - an das hochmolekulare Bindegerüst und die ultrahochmolekularen Polyethylenkörner anlagert. Wenn der weitere Polyethylenbestandteil nicht vorhanden ist, verbinden sich die ultrahochmolelukaren Polyethylenkörner beim Erhitzen des Forminhalts infolge der gewissen formstabilen Erweichung an ihrer Oberfläche.

Die vorstehend beschriebenen Polyethylenbestandteile sind - abgesehen von der Korngrößenverteilung gemäß der ersten erfindungsgemäßen Lösung und der Korngrößenverteilung gemäß der zweiten erfindungsgemäßen Lösung, im Handel erhältlich, z. B. von der Firma Hoechst AG und der Firma BASF AG.

Es wird ausdrücklich darauf hingewiesen, daß Filterelemente mit einzelnen oder mehreren der in den Ansprüchen 4 bis 18 angegebenen Merkmale auch ohne die Merkmale der Ansprüche 1 bis 3 technisch sinnvoll und erfinderisch sind. Dies gilt insbesondere für die in den Ansprüchen 11, 12, 13, 14 angegebenen Merkmale.

Die Erfindung wird nachfolgend anhand von Beispielen noch näher erläutert. Es zeigt:
- **Fig. 1**: eine Filtervorrichtung im Schnitt;
- **Fig. 2**: ein einzelnes Filterelement der Filtervorrichtung von **Fig. 1** in Seitenansicht gemäß Pfeil II in **Fig. 1**;
- **Fig. 3**: einen Horizontalschnitt eines Filterelements (allerdings mit einer geringeren Anzahl von Wandprofilierungen als bei **Fig. 2)**;
- **Fig. 4**: einen Ausschnitt der Außenoberfläche des Filterelements von **Fig. 2** und **3** im stark vergrößerten Schnitt;
- **Fig. 5**: einen Ausschnitt der Außenoberfläche eines alternativen Filterelements;
- **Fig. 6**: ein ultrahochmolekulares Polyethylenkorn mit einer speziellen Korngestalt;
- **Fig. 7, 9, 10, 11**: Graphen "kumulierter Porenanteil in Prozent über Porendurchmesser" für mehrere unbeschichtete Formkörper;
- **Fig. 8, 12**: Graphen wie **Fig. 7, 9. 10, 11**, aber für beschichtete Formkörper bzw. die Beschichtung.

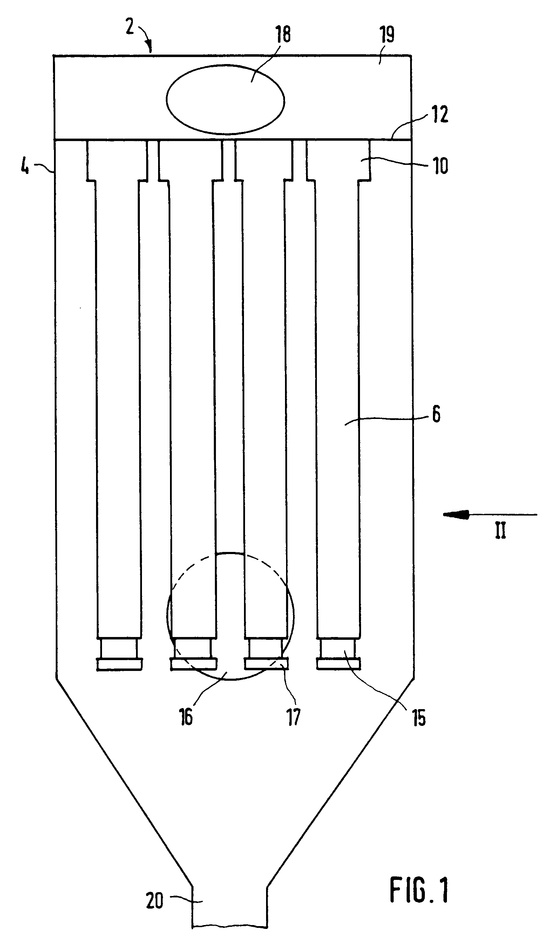

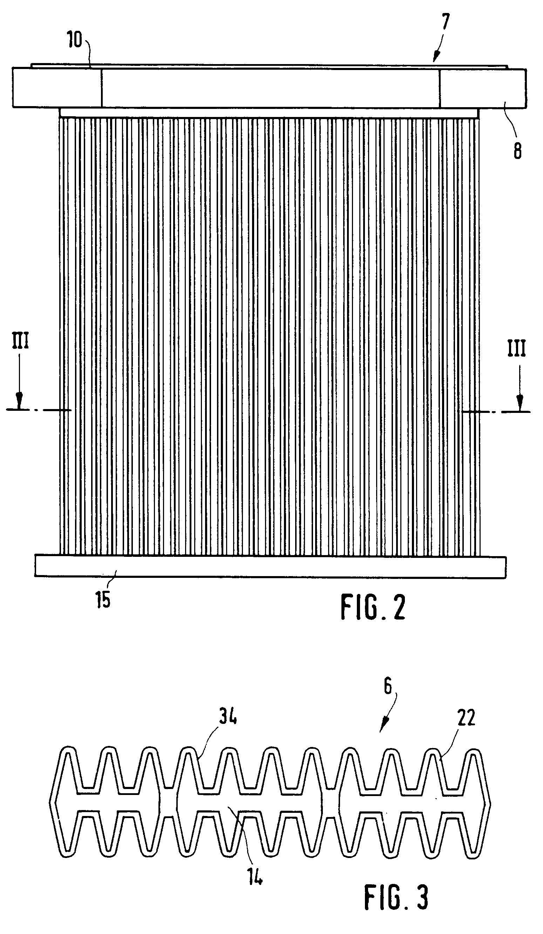

Die in **Fig. 1** gezeichnete Filtervorrichtung 2, häufig kurz auch "Filter" genannt, besteht im wesentlichen aus einem Gehäuse 4, in dem beim gezeichneten Ausführungsbeispiel vier Filterelemente 6 beabstandet und parallel zueinander angeordnet sind. Die Filterelemente 6 haben - grob gesprochen - die Gestalt eines schmalen, hochkant gestellten Quaders, jedoch mit balgartig zick-zack-förmig verlaufenden Wänden an den Langseiten (vgl. **Fig. 3**). Derartige Filterelemente 6 werden auch Lamellen-Filterlemente genannt. Die filtertaschenförmigen Filterelemente 6 sind hohl, an ihrer Oberseite sowie an ihrer Unterseite offen, und haben ringsum etwa konstante Wandstärke. Es wird darauf hingewiesen, daß die Filterelemente auch eine andere Gestalt, beispielsweise eine rohrförmige Gestalt, haben können.

Jedes der Filterelemente 6 besteht aus einem außen beschichteten Formkörper 22, dessen Materialzusammensetzung weiter unten noch genauer beschrieben wird. Jeder Formkörper 22 ist im oberen Kopfbereich mit einem ringsum vorragenden Randbereich 10 versehen und dort mit einem Befestigungs- und Versteifungsblech 8 versehen, wodurch er sich leichter in dem Gehäuse 4 der Filtervorrichtung 2 befestigen läßt. Die vier Filterelemente 6 sind von unten her an einem quer in dem Gehäuse 4 angeordneten, kräftigen Lochblech 12 befestigt, wobei jeweils der Filterelement-Innenraum 14 über mehrere Öffnungen mit dem Raum oberhalb des Lochblechs 12 in Verbindung steht. Im unteren Fußbereich jedes Filterelements 6 ist eine Fußleiste 15 an dem Formkörper 22 befestigt, die den Formkörper 22 unten verschließt und beidendig überragt. Die Fußleiste 15 ruht mit ihren beiden Enden jeweils auf einem Vorsprung 17 des Gehäuses 4 auf. Der gezeichnete Formkörper 22 ist in drei, in Längsrichtung der Fußleiste 15 aufeinanderfolgende Hohlräume aufgeteilt.

Das zu filternde Medium strömt dem Inneren des Gehäuses 4 durch eine Zuströmöffnung 16 zu, strömt dann von außen nach innen in die Filterelemente 6, von dort in den Raum 19 oberhalb des Lochblechs 12, und verläßt die Filtervorrichtung 2 durch eine Abströmöffnung 18. Unterhalb der Filterelemente 6 ist das Gehäuse 4 trichterartig gestaltet, so daß aus dem zu filternden Medium abgeschiedene und von den Filterelementen 6 durch Abreinigung nach unten abfallende Partikel von Zeit zu Zeit durch eine Abzugsöffnung 20 abgezogen werden können.

Der Formkörper 22 jedes Filterelements 6 besteht z.B. aus ultrahochmolekularen Polyethylenkörnern und einem weiteren Polyethylenbestandteil. Diese Bestandteile waren beim Einfüllen in die Herstellungsform feinkörnig, in dem fertigen Formkörper 22 liegt jedoch nur noch das ultrahochmolekulare Polyethylen in körniger Form vor. Die genannten Bestandteile sind durch Wärmeeinwirkung nach dem weiter vorne beschriebenen Herstellungsverfahren zu dem im wesentlichen formstabilen, durchlässig-porösen Formkörper vereinigt.

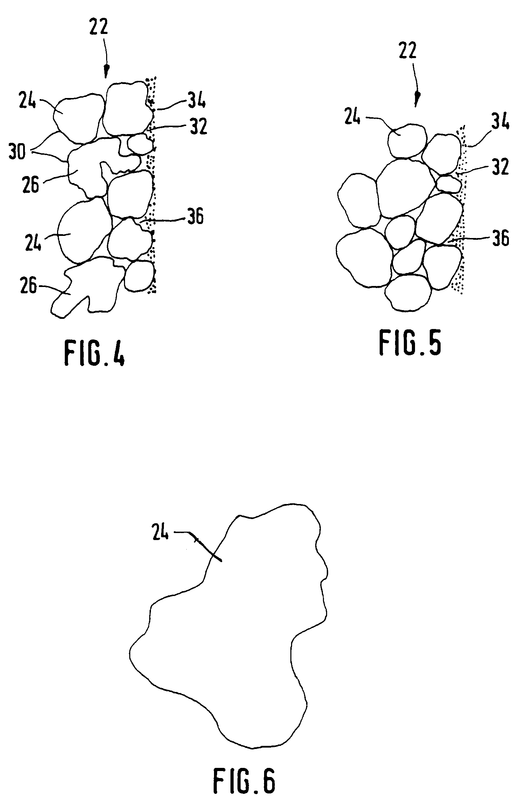

**Fig. 4** zeigt schematisiert den Aufbau des fertigen Formkörpers 22 einschließlich einer feinporigen Oberflächenporen-Beschichtung 32. Der hochmolekulare Polyethylenbestandteil 26 bildet unter Wärmeeinwirkung bei der Herstellung ein Bindegerüst zwischen den Körnern aus ultrahochmolekularem Polyethylen. Die niedermolekularen Bestandteile (30) setzen sich an dem hochmolekularen und dem ultrahochmolekularen Polyethylenmaterial zusätzlich an. Die ultrahochmolekularen Polyethylenkörner 24 haben sich bei der Herstellung praktisch nicht in ihrer Gestalt verändert. Insgesamt ist die Struktur des Formkörpers 22 hochporös. Wenn man ohne hochmolekularen und ohne niedermolekularen Polyethylenbestandteil arbeitet, ergibt sich ein Formkörperaufbau gemäß Fig. 5. Die ultrahochmolekularen Körner 24 sind an ihren Kontaktstellen miteinander versintert.

Die Beschichtung 32 besteht aus kleinen Polytetrafluorethylen-Körnern. Die Beschichtung 32 füllt die an der Außenoberfläche 34 (das ist die Zuströmoberfläche für das zu filternde Medium) des Formkörpers 22 vorhandenen Poren 36 mindestens zu einem Teil ihrer Tiefe aus.

In **Fig. 6** ist die Korngestalt eines bevorzugten, ultrahochmolekularen Polyethylenbestandteils 24 veranschaulicht. Diese Korngestalt kann man alsgrob gesprochen - etwa kugelig mit beulenartigen bzw. warzenartigen Erhebungen 38 beschreiben. Die vorteilhaften Auswirkungen des Einsatzes von ultrahochmolekularem Polyethylen mit dieser Korngestalt sind weiter vorne beschrieben worden.

### Beispiele

Nachfolgend werden drei Beispiele für erfindungsgemäße Formkörper hinsichtlich ihres Materialaufbaus und der Korngrößenverteilung der ultrahochmolekularen Poyethylenkörner genauer beschrieben und einem Vergleichsbeispiel gemäß dem Stand der Technik gegenübergestellt.

### Beispiel 1:

Aus etwa 60 Gew.-% ultrahochmolekularem Polyethylen mit einer mittleren Molmasse von 2 x 10⁶ und etwa 40 Gew.-% feinkörnigem hochmolekularen Polyethylen mit einer mittleren Molmasse von etwa 3 x 10⁵ wird nach dem beschriebenen Verfahren ein Formkörper hergestellt. Die Korngrößenverteilung des ultrahochmolekularen Bestandteils im Ausganszustand ist:

| | |
|---|---|
| unter 63 µm: | 1 % |
| 63 bis 125 µm: | 59 % |
| 125 bis 250 µm: | 40 % |
| über 250 µm: | 0 % |

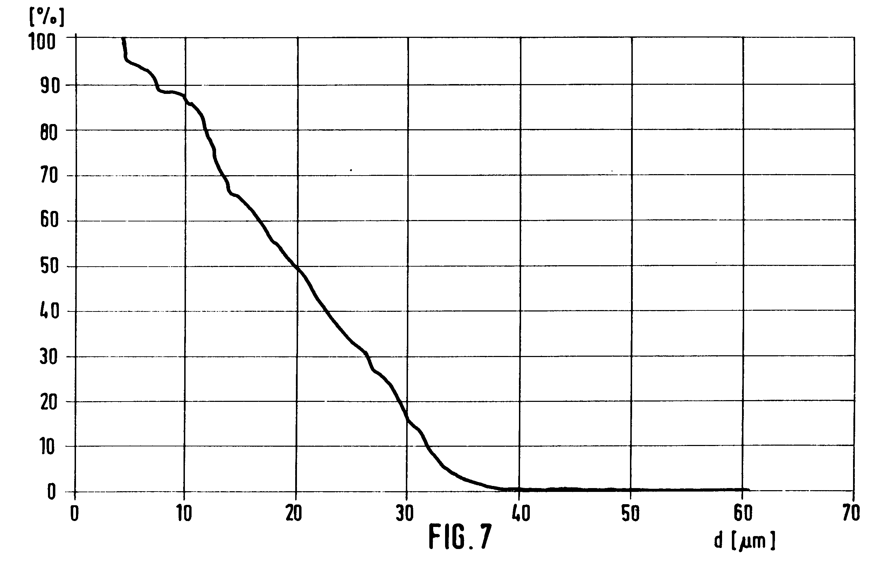

An dem Formkörper ermittelt man einen Graph "kumulierter Porenanteil in Prozent über Porendurchmesser" gemäß **Fig. 7**. Der Porendurchmesser d₅₀, d.h. derjenige Porendurchmesser des Formkörpers, bei dem 50 % der Poren größer als d₅₀ und 50 % der Poren kleiner als d₅₀ sind, beträgt etwa 20 µm. Der Graph von **Fig. 7** ist im Bereich von etwa 10 bis 83 % im wesentlichen linear. Es gibt praktisch keine Poren mit einer Größe oberhalb von 40 µm.

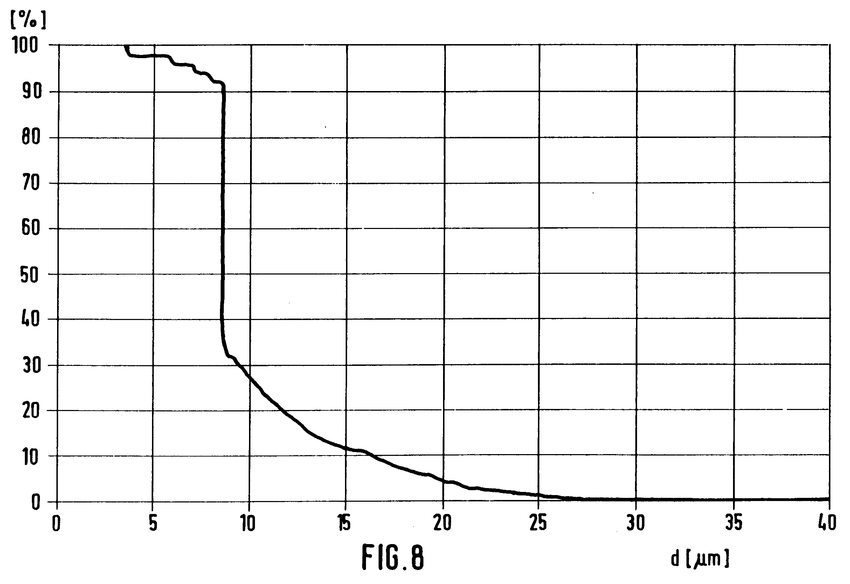

Nach Aufbringen einer Beschichtung aus kleinen Polytetrafluorethylen-Körnern ermittelt mananalog dem Graph von **Fig. 7** - den Graph der Porengrößenverteilung gemäß **Fig. 8**. Jetzt beträgt d₅₀ etwa 8,5 µm. Nur etwa 36 % der Poren sind größer als d₅₀, und nur etwa 10 % der Poren sind kleiner als d₅₀. Poren mit einer Größe oberhalb von 30 µm sind praktisch nicht vorhanden.

Nach 200 Betriebsstunden in einer Filtervorrichtung gemäß **Fig. 1** mißt man an dem Filterelement einen Druckverlust von 225 mmWS.

Beispiel 1 liegt innerhalb der Festlegungen von Anspruch 1.

### Beispiel 2:

Aus etwa 54 Gew.-% ultrahochmolekularem Polyethylen mit einer mittleren Molmasse von etwa 4 x 10⁶, etwa 35 Gew.-% feinkörnigem hochmolekularen Polyethylen mit einer mittleren Molmasse von 3 x 10⁵ und etwa 11 Gew.-% feinkörnigem niedermolekularen Polyethylen mit einer mittleren Molmasse von etwa 2 x 10⁴ wird nach dem beschriebenen Verfahren ein Formkörper hergestellt. Die Korngrößenverteilung des ultrahochmolekularen Bestandteils im Ausgangszustand ist:

| | |
|---|---|
| unter 63 µm: | 1,5 % |
| 63 bis 125 µm: | 23 % |
| 125 bis 250 µm: | 73 % |
| 250 bis 315 µm: | 3 % |
| über 400 µm: | 0 % |

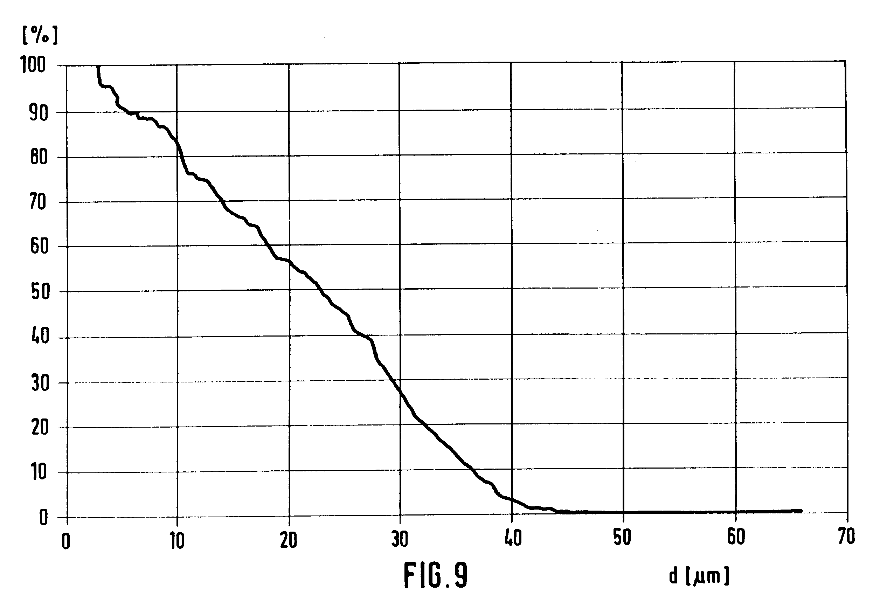

An dem Formkörper ermittelt man einen Graph "kumulierter Porenanteil in Prozent über Porendurchmesser" gemäß **Fig. 9**. Der Porendurchmesser d₅₀ beträgt etwa 23 µm. Der Graph von **Fig. 9** ist im Bereich von etwa 8 bis 75 % im wesentlichen linear. Es gibt praktisch keine Poren mit einer Größe oberhalb von 45 µm.

Nach 200 Betriebsstunden in einer Filtervorrichtung gemäß **Fig. 1** mißt man an dem mit kleinen Polytetrafluorethylen-Körnern beschichteten Filterelement einen Druckverlust von 240 mmWS.

Beispiel 2 liegt innerhalb der Festlegungen von Anspruch 2, zugleich aber auch innerhalb der Festlegungen von Anspruch 1.

### Beispiel 3:

Aus 100 Gew.-% ultrahochmolekularem Polyethylen mit einer mittleren Molmasse von etwa 4 x 10⁶ wird nach dem beschriebenen Verfahren ein Formkörper hergestellt. Die Korngrößenverteilung des Ausgangsmaterials ist:

| | |
|---|---|
| unter 63 µm: | 1,5 % |
| 63 bis 125 µm: | 23 % |
| 125 bis 250 µm: | 73 % |
| 250 bis 315 µm: | 3 % |
| über 400 µm: | 0 % |

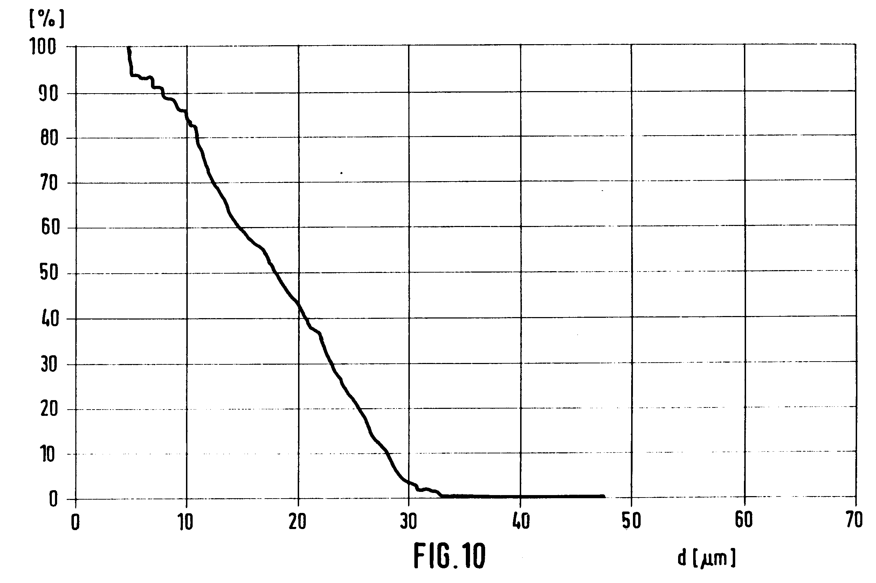

An dem Formkörper ermittelt man einen Graph "kumulierter Porenanteil in Prozent über Porendurchmesser" gemäß **Fig. 10**. Der Porendurchmesser d₅₀ beträgt etwa 17,5 µm. Der Graph von **Fig. 10** ist im Bereich von etwa 4 bis 81 % im wesentlichen linear. Es gibt praktisch keine Poren mit einer Größe oberhalb von 35 µm.

Nach 200 Betriebsstunden in einer Filtervorrichtung gemäß **Fig. 1** mißt man an dem mit kleinen Polytetrafluorethylen-Körnern beschichteten Filterelement einen Druckverlust von 205 mmWS.

Beispiel 3 liegt innerhalb der Festlegungen von Anspruch 3, zugleich aber auch innerhalb der Festlegungen von Anspruch 1 und 2.

### Vergleichsbeispiel:

Aus etwa 60 Gew.-% ultrahochmolekularem Polyethylen mit einer mittleren Molmasse von etwa 2 x 10⁶ und etwa 40 Gew.-% feinkörnigem hochmolekularen Polyethylen mit einer mittleren Molmasse von etwa 3 x 10⁵ wird nach dem beschriebenen Verfahren ein Formkörper hergestellt. Die Korngrößenverteilung des ultrahochmolekularen Bestandteils im Ausgangszustand ist:

| | |
|---|---|
| unter 63 µm: | 4 % |
| 63 bis 125 µm: | 48 % |
| 125 bis 250 µm: | 45 % |
| über 250 µm: | 3 % |

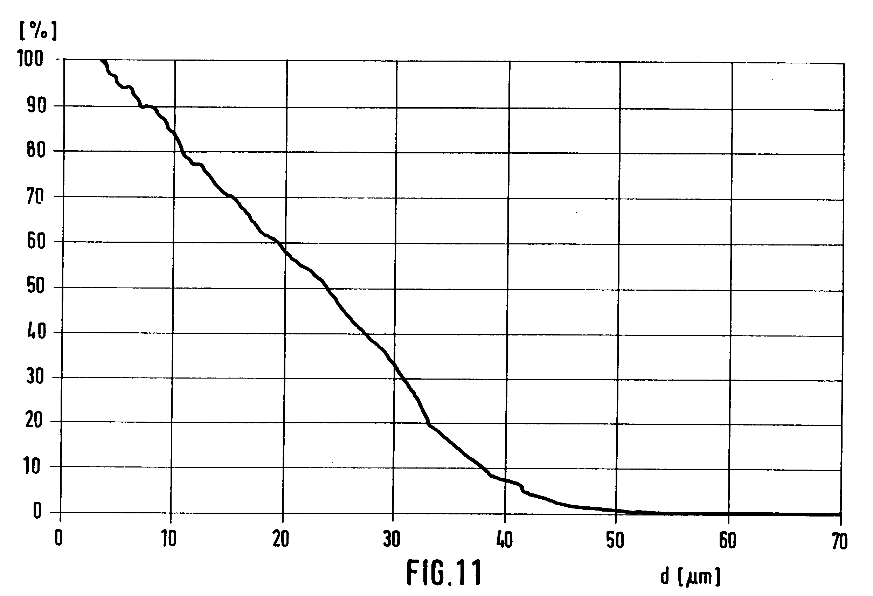

An dem Formkörper ermittelt man einen Graph "kumulierter Porenanteil in Prozent über Porendurchmesser" gemäß **Fig. 11**. Der Porendurchmesser d₅₀ beträgt etwa 24 µm. Es gibt praktisch keine Poren mit einer Größe oberhalb von 55 µm.

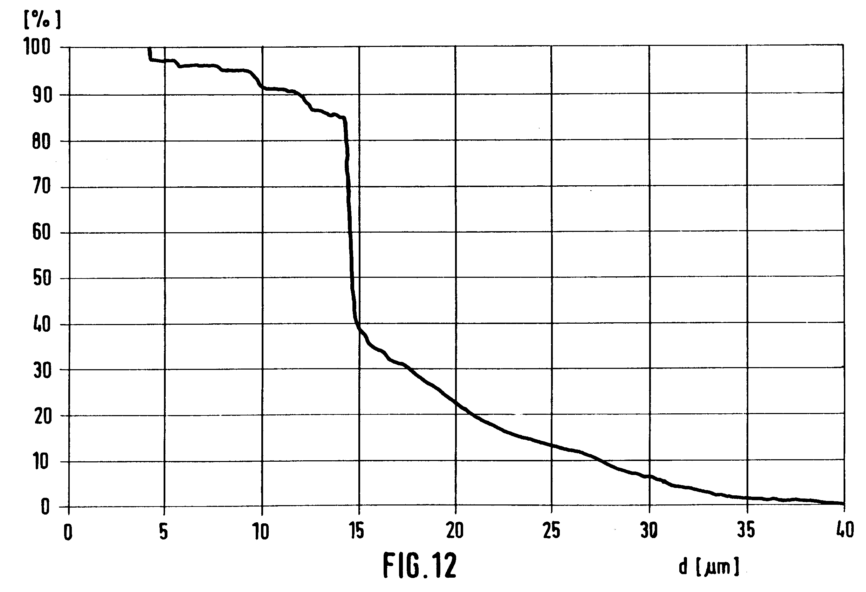

Nach Aufbringen einer Beschichtung aus kleinen Polytetrafluorethylen-Körnern ermittelt mananalog dem Graph von **Fig. 11** - den Graph der Porengrößenverteilung gemäß **Fig. 12**. Jetzt beträgt d₅₀ etwa 14,5 µm. Etwa 40 % der Poren sind größer als d₅₀, und etwa 15 % der Poren sind kleiner als d₅₀.

Nach 200 Betriebsstunden in einer Filtervorrichtung gemaß **Fig. 1** mißt man an dem Filterelement einen Druckverlust von 270 mmWS.

Der Formkörper gemäß Vergleichssbeispiel liegt außerhalb der Festlegungen der Ansprüche 1, 2 und 3.

Es versteht sich, daß bei allen vier Beispielen die Beschichtung aus dem gleichen Ausgangsmaterial aufgebracht worden ist und daß die Druckverlustmessungen in der gleichen Filtervorrichtung, die mit Luft des gleichen Gehalts an Feststoffpartikeln beaufschlagt worden ist, vorgenommen worden sind.

Im Fall einer Beschichtung aus Polytetrafluorethylen-Teilchen ist es generell bevorzugt, die Beschichtung in Form einer Suspension aufzubringen, die zusätzlich einen Klebstoff enthält. Besonders geeignet sind Klebstoffe, die als Dispersionskleber bekannt sind, vorzugsweise Klebstoffdispersionen auf der Basis von Polyvinylacetat, wie MOWILITH (eingetragenes Warenzeichen der Hoechst AG), was eine wäßrige Copolymerisatdispersion von Vinylacetat, Ethylen und Vinylchlorid ist. Typischerweise hat die Suspension, die auf die Zuströmoberfläche des Filterelements zur Erzeugung der Beschichtung aufgebracht werden soll, folgende Zusammensetzung:
20 Gew.-% Polytetrafluorethylen-Teilchen
6 Gew.-% MOWILITH
74 Gew.-% Wasser

## Patentansprüche

1. Filterelement (6), insbesondere zum Abscheiden von Feststoffpartikeln aus Luft, mit folgenden Merkmalen:
(a) das Filterelement (6) weist einen durchlässig-porösen, im wesentlichen formstabilen Formkörper (22) auf;
(b) der Formkörper (22) besteht im wesentlichen aus Polyethylen;
(c) für den Aufbau des Formkörpers (22) sind ultrahochmolekulares, feinkörniges Polyethylen (24) mit einer mittleren Molmasse von mehr als 10⁶ und ein im Ausgangszustand feinkörniger, weiterer Polyethylenbestandteil (26, 30) mit einer mittleren Molmasse von weniger als 10⁶ vorgesehen;
(d) die Körner aus ultrahochmolekularem Polyethylen (24) und der weitere Polyethylenbestandteil (26, 30) sind durch Wärmeeinwirkung zu dem Formkörper (22) vereinigt; und
(e) der Formkörper (22) ist an seiner Zuströmoberfläche (34) für das zu filternde Medium mit einer feinporösen Beschichtung (32) aus einem feinkörnigen Material versehen, das eine kleinere mittlere Korngröße als der Formkörper (22) aufweist und dessen Oberflächenporen (36) an der Zuströmoberfläche (34) mindestens zu einem erheblichen Teil ihrer Tiefe ausfüllt,
**dadurch gekennzeichnet,**
(f) daß das ultrahochmolekulare Polyethylen (24) im Ausgangszustand eine Korngrößenverteilung mit mindestens 95 Gew.-% der Körner im Bereich von > 63 bis ≦ 250 µm hat.

2. Filterelement (6), insbesondere zum Abscheiden von Feststoffpartikeln aus Luft, mit folgenden Merkmalen:
(a) das Filterelement (6) weist einen durchlässig-porösen, im wesentlichen formstabilen Formkörper (22) auf;
(b) der Formkörper (22) besteht im wesentlichen aus Polyethylen
(c) für den Aufbau des Formkörpers (22) sind ultrahochmolekulares, feinkörniges Polyethylen (24) mit einer mittleren Molmasse von mehr als 10⁶ und ein im Ausgangszustand feinkörniger, weiterer Polyethylenbestandteil (26, 30) mit einer mittleren Molmasse von weniger als 10⁶ vorgesehen;
(d) die Körner aus ultrahochmolekularem Polyethylen (24) und der weitere Polyethylenbestandteil (26, 30) sind durch Wärmeeinwirkung zu dem Formkörper (22) vereinigt; und
(e) der Formkörper (22) ist an seiner Zuströmoberfläche (34) für das zu filternde Medium mit einer feinporösen Beschichtung (32) aus einem feinkörnigen Material versehen, das eine kleinere mittlere Korngröße als der Formkörper (22) aufweist und dessen Oberflächenporen (36) an der Zuströmoberfläche (34) mindestens zu einem erheblichen Teil ihrer Tiefe ausfüllt,
**dadurch gekennzeichnet,**
(f) daß das ultrahochmolekulare Polyethylen (24) im Ausgangszustand eine Korngrößenverteilung mit mindestens 60 Gew.-% der Körner im Bereich von > 125 bis ≦ 250 µm hat.

3. Filterelement (6), insbesondere zum Abscheiden von Feststoffpartikeln aus Luft, mit folgenden Merkmalen:
(a) das Filterelement (6) weist einen durchlässig-porösen, im wesentlichen formstabilen Formkörper (22) auf;
(b) der Formkörper (22) besteht im wesentlichen aus Polyethylen;
(c) für den Aufbau des Formkörpers (22) ist ultrahochmolekulares, feinkörniges Polyethylen mit einer mittleren Molmasse von mehr als 10⁶ vorgesehen; und
(d) der Formkörper (22) ist an seiner Zuströmoberfläche (34) für das zu filternde Medium mit einer feinporösen Beschichtung (32) aus einem feinkörnigen Material versehen, das eine kleinere mittlere Korngröße als der Formkörper (22) aufweist und dessen Oberflächenporen (36) an der Zuströmoberfläche (34) mindestens zu einem erheblichen Teil ihrer Tiefe ausfüllt,
**dadurch gekennzeichnet,**
(e) daß das ultrahochmolekulare Polyethylen (24) im Ausgangszustand eine Korngrößenverteilung mit mindestens 70 Gew.-% der Körner im Bereich von > 63 bis ≦ 315 µm hat; und
(f) daß die Körner aus ultrahochmolekularem Polyethylen (24) durch Wärmeeinwirkung unmittelbar miteinander zu dem Formkörper (22) vereinigt sind.

4. Filterelement (6) nach Anspruch 3,
**dadurch gekennzeichnet,**
daß mindestens 80 Gew.-%, vorzugsweise mindestens 90 Gew.-%, höchst vorzugsweise mindestens 95 Gew.-% der Körner im Bereich von > 63 bis ≦ 315 µm sind.

5. Filterelement (6) nach mindestens einem der Ansprüche 1, 3 und 4,
**dadurch gekennzeichnet,**
daß mindestens 60 Gew.-% der Körner im Bereich von > 125 bis ≦ 250 µm sind.

6. Filterelement (6) nach mindestens einem der Ansprüche 1 bis 5,
**dadurch gekennzeichnet,**
daß mindestens 70 Gew.-% der Körner im Bereich von > 125 bis ≦ 250 µm sind.

7. Filterelement (6) nach mindestens einem der Ansprüche 2 bis 6,
**dadurch gekennzeichnet,**
daß mindestens 80 Gew.-%, vorzugsweise mindestens 90 Gew.-%, höchst vorzugsweise mindestens 95 Gew.-% der Körner im Bereich von > 63 bis ≦ 250 µm sind.

8. Filterelement nach mindestens einem der Ansprüche 1 bis 7,
**dadurch gekennzeichnet,**
daß mindestens 97 Gew.-% der Körner im Bereich von > 63 bis ≦ 250 µm sind.

9. Filterelement (6) nach mindestens einem der Ansprüche 1, 2 und 5 bis 8,
**dadurch gekennzeichnet,**
daß der Gewichtsanteil des weiteren Polyethylenbestandteils (26, 30) bezogen auf die Summe von ultrahochmolekularem Polyethylen (24) und weiterem Polyethylenbestandteil (26, 30) 3 bis 70 %, vorzugsweise 5 bis 60%, höchst vorzugsweise 20 bis 60 % beträgt.

10. Filterelement (6) nach mindestens einem der Ansprüche 1, 2 und 5 bis 9,
**dadurch gekennzeichnet,**
daß der weitere Polyethylenbestandteil (26, 30) eine mittlere Molmasse im Bereich von 10³ bis 10⁶ hat.

11. Filterelement (6) nach mindestens einem der Ansprüche 1, 2 und 5 bis 10,
**dadurch gekennzeichnet,**
daß sich der weitere Polyethylenbestandteil aus einem ersten Unterbestandteil (26) mit einer mittleren Molmasse im Bereich von 10⁴ bis 10⁶, vorzugsweise im Bereich von 10⁵ bis 10⁶, und einem zweiten Unterbestandteil (30) mit einer mittleren Molmasse von weniger als 5 x 10⁴, vorzugsweise im Bereich von 10³ bis 5 x 10⁴, höchst vorzugsweise im Bereich von 5 x 10³ bis 5 x 10⁴, zusammensetzt.

12. Filterelement (6) nach Anspruch 11,
**dadurch gekennzeichnet,**
daß der Gewichtsanteil des zweiten Unterbestandteils (30) bezogen auf den gesamten weiteren Polyethylenbestandteil 2 bis 50 %, vorzugsweise 5 bis 20 %, beträgt.

13. Filterelement nach mindestens einem der Ansprüche 1 bis 12,
**dadurch gekennzeichnet,**
daß das ultrahochmolekulare Polyethylen (24) im Ausgangszustand eine derartige Korngrößenverteilung hat, daß sich für den unbeschichteten Formkörper (22) ein Graph "kumulierter Porenanteil in Prozent über Porendurchmesser" mit einem im wesentlichen linearen Verlauf mindestens im Bereich von 20 bis 75 % ergibt.

14. Filterelement nach mindestens einem der Ansprüche 1 bis 13,
**dadurch gekennzeichnet,**
daß die Körner aus ultrahochmolekularem Polyethylen (24) eine Gestalt mit beulenartigen Erhebungen über die ansonsten etwa kugelige Korngestalt haben.

15. Filterelement nach mindestens einem der Ansprüche 1 bis 14,
**dadurch gekennzeichnet,**
daß das ultrahochmolekulare Polyethylen (24) eine mittlere Molmasse von weniger als 6 x 10⁶ hat.

16. Filterelement nach Anspruch 15,
**dadurch gekennzeichnet,**
daß das ultrahochmolekulare Polyethylen (24) eine mittlere Molmasse im Bereich von 2 x 10⁶ bis 6 x 10⁶ hat.

17. Filterelement nach mindestens einem der Ansprüche 1 bis 16,
**dadurch gekennzeichnet,**
daß das Material der Beschichtung (32) Polytetrafluorethylen ist.

18. Filterelement nach mindestens einem der Ansprüche 1 bis 17,
**dadurch gekennzeichnet,**
daß das Material der Beschichtung (32) eine mittlere Korngröße von unter 100 µm, vorzugsweise unter 50 µm hat.

19. Verfahren zur Herstellung eines Filterelements (6) gemäß mindestens einem der Ansprüche 1 bis 18,
**dadurch gekennzeichnet,**
- daß die Körner aus ultrahochmolekularem Polyethylen (24), gegebenenfalls gemischt mit dem weiteren Polyethylenbestandteil (26, 30), in eine Form gefüllt werden;
- daß der Forminhalt auf eine Temperatur von 170°C bis 250°C erhitzt wird für eine für das Vereinigen zu dem Formkörper (22) ausreichende Zeit;
- daß der Formkörper (22) in der Form abgekühlt wird;
- daß der Formkörper (22) aus der Form entnommen wird; und
- daß auf die Zuströmoberfläche (34) des aus der Form entnommenen Formkörpers (22) die Beschichtung (32) aufgebracht wird.

20. Verfahren nach Anspruch 19,
**dadurch gekennzeichnet,**
daß die Beschichtung (32) in Form einer Suspension aufgebracht wird und anschließend die Suspension getrocknet wird.

21. Verfahren nach Anspruch 20,
**dadurch gekennzeichnet,**
daß die Suspension mittels des Sprüh- und Bürst-Verfahrens aufgebracht wird.

## Claims

1. A filter element (6), in particular for separating solid particles from air, having the following features:
(a) the filter element (6) has a permeably porous, substantially inherently stable shaped body (22);
(b) the shaped body (22) is made substantially of polyethylene;
(c) the shaped body (22) is built up of ultrahigh-molecular, fine-grained polyethylene (24) with an average molecular weight of more than 10⁶ and a further polyethylene component (26, 30) which is fine-grained in the initial state and has an average molecular weight of less than 10⁶;
(d) the grains of ultrahigh-molecular polyethylene (24) and the further polyethylene component (26, 30) are combined into the shaped body (22) by the action of heat; and
(e) the shaped body (22) is provided on its afflux surface (34) for the medium to be filtered with a fine-pored coating (32) of a fine-grained material having a smaller average grain size than the shaped body (22) and filling at least a considerable depth of the surface pores (36) thereof on the afflux surface (34),
**characterized** in that
(f) the ultrahigh-molecular polyethylene (24) has in the initial state a grain-size distribution with at least 95% by weight of grains in the range of > 63 to ≦ 250 micrometers.

2. A filter element (6), in particular for separating solid particles from air, having the following features:
(a) the filter element (6) has a permeably porous, substantially inherently stable shaped body (22);
(b) the shaped body (22) is made substantially of polyethylene;
(c) the shaped body (22) is built up of ultrahigh-molecular, fine-grained polyethylene (24) with an average molecular weight of more than 10⁶ and a further polyethylene component (26, 30) which is fine-grained in the initial state and has an average molecular weight of less than 10⁶;
(d) the grains of ultrahigh-molecular polyethylene (24) and the further polyethylene component (26, 30) are combined into the shaped body (22) by the action of heat; and
(e) the shaped body (22) is provided on its afflux surface (34) for the medium to be filtered with a fine-pored coating (32) of a fine-grained material having a smaller average grain size than the shaped body (22) and filling at least a considerable depth of the surface pores (36) thereof on the afflux surface (34),
**characterized** in that
(f) the ultrahigh-molecular polyethylene (24) has in the initial state a grain-size distribution with at least 60% by weight of grains in the range of > 125 to ≦ 250 micrometers.

3. A filter element (6), in particular for separating solid particles from air, having the following features:
(a) the filter element (6) has a permeably porous, substantially inherently stable shaped body (22);
(b) the shaped body (22) is made substantially of polyethylene;
(c) the shaped body (22) is built up of ultrahigh-molecular, fine-grained polyethylene with an average molecular weight of more than 10⁶; and
(d) the shaped body (22) is provided on its afflux surface (34) for the medium to be filtered with a fine-pored coating (32) of a fine-grained material having a smaller average grain size than the shaped body (22) and filling at least a considerable depth of the surface pores (36) thereof on the afflux surface (34),
**characterized** in that
(e) the ultrahigh-molecular polyethylene (24) has in the initial state a grain-size distribution with at least 70% by weight of grains in the range of > 63 to ≦ 315 micrometers; and
(f) the grains of ultrahigh-molecular polyethylene (24) are combined directly into the shaped body (22) by the action of heat.

4. The filter element (6) of claim 3, **characterized** in that at least 80% by weight, preferably at least 90% by weight, most preferably at least 95% by weight, of grains are in the range of > 63 to ≦ 315 micrometers.

5. The filter element (6) of at least one of claims 1, 3 and 4, **characterized** in that at least 60% by weight of grains are in the range of > 125 to ≦ 250 micrometers.

6. The filter element (6) of at least one of claims 1 to 5, **characterized** in that at least 70% by weight of grains are in the range of > 125 to ≦ 250 micrometers.

7. The filter element (6) of at least one of claims 2 to 6, **characterized** in that at least 80% by weight, preferably at least 90% by weight, most preferably at least 95% by weight, of grains are in the range of > 63 to ≦ 250 micrometers.

8. The filter element of at least one of claims 1 to 7, **characterized** in that at least 97% by weight of grains are in the range of > 63 to ≦ 250 micrometers.

9. The filter element (6) of at least one of claims 1, 2 and 5 to 8, **characterized** in that the part by weight of the further polyethylene component (26, 30) is 3 to 70%, preferably 5 to 60%, most preferably 20 to 60%, based on the sum of ultrahigh-molecular polyethylene (24) and further polyethylene component (26, 30).

10. The filter element (6) of at least one of claims 1, 2 and 5 to 9, **characterized** in that the further polyethylene component (26, 30) has an average molecular weight in the range of 10³ to 10⁶.

11. The filter element (6) of at least one of claims 1, 2 and 5 to 10, **characterized** in that the further polyethylene component is composed of a first subcomponent (26) with an average molecular weight in the range of 10⁴ to 10⁶, preferably in the range of 10⁵ to 10⁶, and a second subcomponent (30) with an average molecular weight of less than 5 x 10⁴, preferably in the range of 10³ to 5 x 10⁴, most preferably in the range of 5 x 10³ to 5 x 10⁴.

12. The filter element (6) of claim 11, **characterized** in that the part by weight of the second subcomponent (30) is 2 to 50%, preferably 5 to 20%, based on the total further polyethylene component.

13. The filter element of at least one of claims 1 to 12, **characterized** in that the ultrahigh-molecular polyethylene (24) has in the initial state a grain-size distribution such that a graph of "cumulative percentage of pores over pore diameter" with a substantially linear course at least in the range of 20 to 75% results for the uncoated shaped body (22).

14. The filter element of at least one of claims 1 to 13, **characterized** in that the grains of ultrahigh-molecular polyethylene (24) have a shape with bump-like raised areas above the otherwise substantially spherical grain shape.

15. The filter element of at least one of claims 1 to 14, **characterized** in that the ultrahigh-molecular polyethylene (24) has an average molecular weight of less than 6 x 10⁶.

16. The filter element of claim 15, **characterized** in that the ultrahigh-molecular polyethylene (24) has an average molecular weight in the range of 2 x 10⁶ to 6 x 10⁶.

17. The filter element of at least one of claims 1 to 16, **characterized** in that the material of the coating (32) is polytetrafluoroethylene.

18. The filter element of at least one of claims 1 to 17, **characterized** in that the material of the coating (32) has an average grain size of under 100 micrometers, preferably under 50 micrometers.

19. A method for producing the filter element (6) of at least one of claims 1 to 18, **characterized** by the steps of
- pouring the grains of ultrahigh-molecular polyethylene (24), optionally mixed with the further polyethylene component (26, 30), into a mold;
- heating the content of the mold to a temperature of 170°C to 250°C for a sufficient time to combine the grains into the shaped body (22);
- cooling the shaped body (22) in the mold;
- removing the shaped body (22) from the mold; and
- applying the coating (32) to the afflux surface (34) of the shaped body (22) removed from the mold.

20. The method of claim 19, **characterized** in that the coating (32) is applied in the form of a suspension and the suspension is then dried.

21. The method of claim 20, **characterized** in that the suspension is applied by the spray and brush method.

## Revendications

1. Elément filtrant (6), en particulier pour la séparation de particules solides à partir d'air, présentant les caractéristiques suivantes :
(a) l'élément filtrant (6) présente un corps moulé (22) perméable-poreux, essentiellement indéformable ;
(b) le corps moulé (22) est essentiellement constitué de polyéthylène ;
(c) on prévoit pour la construction du corps moulé (22) du polyéthylène de poids moléculaire ultraélevé, à grains fins (24) avec une masse molaire moyenne supérieure à 10⁶ et un autre constituant de polyéthylène à grains fins à l'état initial (26, 30) avec une masse molaire moyenne inférieure à 10⁶ ;
(d) les grains du polyéthylène de poids moléculaire ultraélevé (24) et l'autre constituant de polyéthylène (26, 30) sont unis en le corps moulé (22) par l'action de la chaleur ; et
(e) le corps moulé (22) est muni sur sa surface d'arrivée (34) pour le milieu à filtrer d'un revêtement microporeux (32) constitué d'un matériau à grains fins, qui présente une taille moyenne de grains plus petite que le corps moulé (22) et remplit les pores superficielles (36) de celui-ci sur la surface d'arrivée (34) au moins jusqu'à une partie importante de leurs profondeurs,
caractérisé en ce que
(f) le polyéthylène de poids moléculaire ultraélevé (24) présente à l'état initial une distribution de taille de grains avec au moins 95 % en poids des grains dans le domaine > 63 à ≦ 250 µm.

2. Elément filtrant (6), en particulier pour la séparation de particules solides à partir d'air, présentant les caractéristiques suivantes :
(a) l'élément filtrant (6) présente un corps moulé (22) perméable-poreux, essentiellement indéformable ;
(b) le corps moulé (22) est essentiellement constitué de polyéthylène ;
(c) on prévoit pour la construction du corps moulé (22) du polyéthylène de poids moléculaire ultraélevé, à grains fins (24) avec une masse molaire moyenne supérieure à 10⁶ et un autre constituant de polyéthylène à grains fins à l'état initial (26, 30) avec une masse molaire moyenne inférieure à 10⁶ ;
(d) les grains du polyéthylène de poids moléculaire ultraélevé (24) et l'autre constituant de polyéthylène (26, 30) sont unis en le corps moulé (22) par l'action de la chaleur ; et
(e) le corps moulé (22) est muni sur sa surface d'arrivée (34) pour le milieu à filtrer d'un revêtement microporeux (32) constitué d'un matériau à grains fins, qui présente une taille moyenne de grains plus petite que le corps moulé (22) et remplit les pores superficielles (36) de celui-ci sur la surface d'arrivée (34) au moins jusqu'à une partie importante de leurs profondeurs,
caractérisé en ce que
(f) le polyéthylène de poids moléculaire ultraélevé (24) présente à l'état initial une distribution de taille de gras avec au moins 60 % en poids des grains dans le domaine > 125 à ≦ 250 µm.

3. Elément filtrant (6), en particulier pour la séparation de particules solides à partir d'air, présentant les caractéristiques suivantes :
(a) l'élément filtrant (6) présente un corps moulé (22) perméable-poreux, essentiellement indéformable ;
(b) le corps moulé (22) est essentiellement constitué de polyéthylène ;
(c) on prévoit pour la construction du corps moulé (22) du polyéthylène de poids moléculaire ultraélevé, à grains fins (24) avec une masse molaire moyenne supérieure à 10⁶ ; et
(d) le corps moulé (22) est muni sur sa surface d'arrivée (34) pour le milieu à filtrer d'un revêtement microporeux (32) constitué d'un matériau à grains fins, qui présente une taille moyenne de grains plus petite que le corps moulé (22) et remplit les pores superficielles (36) de celui-ci sur la surface d'arrivée (34) au moins jusqu'à une partie importante de leurs profondeurs,
caractérisé en ce que
(e) le polyéthylène de poids moléculaire ultraélevé (24) présente à l'état initial une distribution de taille de grains avec au moins 70 % en poids des grains dans le domaine > 63 à ≦ 315 µm ; et
(f) les grains de polyéthylène de poids moléculaire ultraélevé (24) sont unis directement ensemble en le corps moulé (22) par l'action de la chaleur.

4. Elément filtrant (6) selon la revendication 3, caractérisé en ce qu'au moins 80 % en poids, de préférence au moins 90 % en poids, au maximum de préférence au moins 95 % en poids des grains se trouvent dans le domaine > 63 à ≦ 315 µm.

5. Elément filtrant (6) selon au moins l'une quelconque des revendications 1, 3 et 4, caractérisé en ce qu'au moins 60 % en poids des grains se trouvent dans le domaine > 125 à ≦ 250 µm.

6. Elément filtrant (6) selon au moins l'une quelconque des revendications 1 à 5, caractérisé en qu'au moins 70 % en poids des grains se trouvent dans le domaine > 125 à ≦ 250 µm.

7. Elément filtrant (6) selon au moins l'une quelconque des revendications 2 à 6, caractérisé en ce qu'au moins 80 % en poids, de préférence au moins 90 % en poids, au maximum de préférence au moins 95 % en poids des grains se trouvent dans le domaine > 63 à ≦ 250 µm.

8. Elément filtrant selon au moins l'une quelconque des revendications 1 à 7, caractérisé en ce qu'au moins 97 % en poids des grains se trouvent dans le domaine > 63 à ≦ 250 µm.

9. Elément filtrant (6) selon au moins l'une quelconque des revendications 1, 2 et 5 à 8, caractérisé en ce que la part en poids de l'autre constituant de polyéthylène (26, 30), rapportée à la somme du polyéthylène de poids moléculaire ultraélevé (24) et de l'autre constituant de polyéthylène (26, 30), est de 3 à 70 %, de préférence de 5 à 60 %, au maximum de préférence de 20 à 60 %.

10. Elément filtrant (6) selon au moins l'une quelconque des revendications 1, 2 et 5 à 9, caractérisé en ce que l'autre constituant de polyéthylène (26, 30) présente une masse molaire moyenne dans le domaine de 10³ à 10⁶.

11. Elément filtrant (6) selon au moins l'une quelconque des revendications 1, 2 et 5 à 10, caractérisé en ce que l'autre constituant de polyéthylène est constitué d'un premier sous-constituant (26) avec une masse molaire moyenne dans le domaine de 10⁴ à 10⁶, de préférence dans le domaine de 10⁵ à 10⁶ et d'un deuxième sous-constituant (30) avec une masse molaire moyenne inférieure à 5 x 10⁴, de préférence dans le domaine de 10³ à 5 x 10⁴, au maximum de préférence dans le domaine de 5 x 10³ à 5 x 10⁴.

12. Elément filtrant (6) selon la revendication 11, caractérisé en ce que la part en poids du second sous-constituant (30), rapportée à la totalité de l'autre constituant de polyéthylène est de 2 à 50 %, de préférence de 5 à 20 %.

13. Elément filtrant selon au moins l'une quelconque des revendications 1 à 12, caractérisé en ce que le polyéthylène de poids moléculaire ultraélevé (24) présente à l'état initial une distribution de taille de grains de sorte que pour le corps moulé (22) non recouvert on obtient un graphique "part en pores cumulée en pour-cent en fonction du diamètre des pores" ayant une trajectoire essentiellement linéaire, au moins dans le domaine de 20 à 75 %.

14. Elément filtrant selon au moins l'une quelconque des revendications 1 à 13, caractérisé en ce que les grains du polyéthylène de poids moléculaire ultraélevé (24) ont une forme présentant des élévations semblables à des bosses par rapport à la forme de grains habituellement environ sphérique.

15. Elément filtrant selon au moins l'une quelconque des revendications 1 à 14, caractérisé en ce que le polyéthylène de poids moléculaire ultraélevé (24) présente une masse molaire moyenne inférieure à 6 x 10⁶.

16. Elément filtrant selon la revendication 15, caractérisé en ce que le polyéthylène de poids moléculaire ultraélevé (24) présente une masse molaire moyenne dans le domaine de 2 x 10⁶ à 6 x 10⁶.

17. Elément filtrant selon au moins l'une quelconque des revendications 1 à 16, caractérisé en ce que le matériau du revêtement (32) est du polytétrafluoroéthylène.

18. Elément filtrant selon au moins l'une quelconque des revendications 1 à 17, caractérisé en ce que le matériau du revêtement (32) présente une taille moyenne de grains inférieure à 100 µm, de préférence inférieure à 50 µm.

19. Procédé pour la préparation d'un élément filtrant (6) selon au moins l'une quelconque des revendications 1 à 18, caractérisé en ce que :
- on remplit un moule des grains du polyéthylène de poids moléculaire ultraélevé (24), éventuellement mélangé avec l'autre constituant de polyéthylène (26, 30);
- on chauffe le contenu du moule à une température comprise entre 170°C et 250°C pendant une durée suffisante pour l'union en le corps moulé (22);
- on refroidit le corps moulé (22) dans le moule;
- on retire le corps moulé (22) du moule ; et
- on applique le revêtement (32) sur la surface d'arrivée (34) du corps moulé (22) retiré du moule.

20. Procédé selon la revendication 19, caractérisé en ce qu'on applique le revêtement (32) dans la forme d'une suspension et qu'on sèche ensuite la suspension.

21. Procédé selon la revendication 20, caractérisé en ce qu'on applique la suspension au moyen du procédé d'arrosage et brossage.
